(19) Europäisches Patentamt
European Patent Office
Office européen des brevets

(11) **EP 3 483 202 A1**

(12) **EUROPEAN PATENT APPLICATION**
published in accordance with Art. 153(4) EPC

(43) Date of publication:
**15.05.2019 Bulletin 2019/20**

(51) Int Cl.:
*C08J 3/22* (2006.01)        *C08L 1/02* (2006.01)
*C08L 21/00* (2006.01)

(21) Application number: **17827632.5**

(22) Date of filing: **11.07.2017**

(86) International application number:
**PCT/JP2017/025299**

(87) International publication number:
**WO 2018/012505 (18.01.2018 Gazette 2018/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **11.07.2016 JP 2016136709**

(71) Applicant: **Nippon Paper Industries Co., Ltd.**
**Tokyo 114-0002 (JP)**

(72) Inventors:
• **YASUKAWA, Yusuke**
  **Tokyo 114-0002 (JP)**
• **ITO, Kotaro**
  **Tokyo 114-0002 (JP)**
• **NAKAYAMA, Takeshi**
  **Tokyo 114-0002 (JP)**
• **ISHIZUKA, Kazuhiko**
  **Tokyo 114-0002 (JP)**

(74) Representative: **Cockerton, Bruce Roger**
**Carpmaels & Ransford LLP**
**One Southampton Row**
**London WC1B 5HA (GB)**

(54) **METHOD FOR PRODUCING MASTER BATCH**

(57)    A process for preparing a master batch, comprising: the step of filtrating a dispersion of cellulose nanofibers under pressure or under reduced pressure with a filtration pressure differential of 0.01 MPa or more; and the step of mixing cellulose nanofibers obtained by the filtration step and rubber component is provided. A master batch can be provided to provide a rubber composition with improved mechanical strengths by the invention.

Fig.2

EP 3 483 202 A1

**Description**

TECHNICAL FIELD

The present invention relates to processes for preparing master batches.

BACKGROUND ART

There have been known techniques for improving strengths such as tensile strength of rubber compositions by adding cellulose nanofibers, which is prepared by disintegrating plant fibers down to the nanoscopic level, to the rubber compositions. For example, PTL 1 describes a rubber/short fiber master batch obtained by stirring short cellulose fibers having an average fiber diameter of less than 0.5 $\mu$m with a rubber latex. According to the literature, a rubber/short fiber master batch in which short fibers are homogeneously dispersed in a rubber is obtained by mixing a dispersion prepared by fibrillating short fibers having an average fiber diameter of less than 0.5 $\mu$m in water with a rubber latex and drying the mixture, and rubber compositions showing a superior balance between rubber reinforcement and fatigue resistance can be obtained by using this rubber/short fiber master batch.

CITATION LIST

PATENT LITERATURE

PTL 1: JPA 2006-206864

SUMMARY OF INVENTION

TECHNICAL PROBLEM

However, the cellulose nanofibers may contain undisintegrated fibers due to insufficient disintegration, or may include contaminants during preparation steps. When the rubber compositions were prepared with containing these contaminants, since the rubber compositions were prone to fail from the contaminants as starting points, which caused decrease or scatter in strength, it was problematic that a sufficient reinforcing effect was not exhibited. The present invention it to provide master batches and processes for preparing the same to provide the rubber compositions having superior mechanical strengths.

SOLUTION TO PROBLEM

As a result of the inventor's intensive studies, it has been found that the technical problem can be solved by using cellulose nanofibers filtration treated in certain conditions. Thus, the present invention provides the following:

(1) A process for preparing a master batch, comprising:

the step of filtrating a dispersion of cellulose nanofibers under pressure or under reduced pressure with a filtration pressure differential of 0.01 MPa or more; and
the step of mixing cellulose nanofibers obtained by the filtration step and rubber component.

(2) The process for preparing a master batch of (1), wherein a filtration aid is used in the filtration step.
(3) The process for preparing a master batch of (2), wherein the filtration aid is a granulated substance having an average particle size of 150 $\mu$m or less.
(4) The process for preparing a master batch of (3), wherein the granulated substance is selected from the group consisting of diatomaceous earth, powdered cellulose and a combination thereof.
(5) The process for preparing a master batch of (1), wherein a metallic filter or a membrane filter is used as a filter medium in the filtration step.
(6) The process for preparing a master batch of any one of (1) to (5), wherein the cellulose nanofibers are oxidized cellulose nanofibers.
(7) The process for preparing a master batch of any one of (1) to (6), wherein the dispersion of cellulose nanofibers after the filtration has a contaminant area ratio of 25 % or less when the amount of contaminants is evaluated by the following method:

1) forming a film after adding a surface tension adjustor to the dispersion of cellulose nanofibers after the filtration;

2) arranging a pair of polarizing plates on both sides of the film so that polarizing axes are orthogonalize with each other;

3) exposing light from one side of the polarizing plate, and obtaining a transmitted image from the other side of the polarizing plate; and

4) carrying out image analysis of the image to determine a contaminant area to calculate the contaminant area ratio per gram of bone dry weight of the cellulose nanofibers.

(8) The process for preparing a master batch of (7), wherein the dispersion of cellulose nanofibers after the filtration has the contaminant area ratio of 4 % or less.

(9) A master batch prepared by the process of any one of (1) to (8).

(10) A process for preparing a rubber composition, comprising:

the step of preparing the master batch by the method of any one of (1) to (8); and

the step of crosslinking the master batch.

ADVANTAGEOUS EFFECTS OF INVENTION

The present invention makes it possible to provide master batches and processes for preparing the same to provide rubber compositions with improved mechanical strength.

BRIEF DESCRIPTION OF DRAWINGS

Fig. 1 is a schematic view of the testing method for dispersing quality of the dispersion of cellulose nanofibers.

Fig. 2 is an image obtained in the test (with addition of a surface tension adjustor).

Fig. 3 is an image obtained in the test (without addition of a surface tension adjustor).

DESCRIPTION OF EMBODIMENTS

In the following, the present invention is described in detail. As used herein, the expression "X to Y" means to include the endpoints X and Y.

1. Processes for preparing master batches

The method for preparing the master batches of the present invention comprises the step of filtrating the dispersion of cellulose nanofibers under pressure or under reduced pressure with the filtration pressure differential of 0.01 MPa or more, and the step of mixing the cellulose nanofibers obtained by the filtration step and the rubber component. Although in general, the master batch is defined variously, as used herein, the term "master batch" refers to an uncrosslinked composition comprising a rubber component and cellulose-based fibers, and may contain other components such as a crosslinking agent. The term "rubber composition" refers to a rubber product formed by crosslinking the master batch.

(1) Cellulose nanofibers

The term "cellulose nanofibers" refer to fine fibers obtained by disintegrating cellulose base material after as-needed chemical modification. An average fiber diameter of the cellulose nanofibers is typically from 2 to 500 nm, and preferably 2 to 50 nm in length-weighted average fiber diameter. An average fiber length is preferably 50 to 2000 nm in length-weighted average fiber length. The length-weighted average fiber diameter and length-weighted average fiber length (hereinafter referred to as simply "average fiber diameter" and "average fiber length") can be determined by observing the fibers using an atomic force microscope (AFM) or a transmission electron microscope (TEM). An average aspect ratio of the cellulose nanofibers is typically 10 or more. Although the upper limit is not particularly limited, it is typically 1000 or less. The average aspect ratio can be calculated by the equation below:

$$\text{Average aspect ratio} = \text{Average fiber length} / \text{Average fiber diameter}.$$

In the following, the method for preparing the cellulose nanofibers is explained. For simplicity, cellulose fibers for base materials of the cellulose nanofibers are also referred to as "cellulose base materials".

(1-1) Cellulose base materials

The cellulose base materials may include, but not specifically limited to, for example, plants, animals (e.g., *Ascidiacea*), algae, microorganisms (e.g., acetic acid bacteria (*Acetobacter*)), and products produced by microorganisms. The cellulose base materials derived from the plants may include wood, bamboo, hemp, jute, kenaf, farm wastes, cloth, pulp (unbleached softwood kraft pulp (NUKP), bleached softwood kraft pulp (NBKP), unbleached hardwood kraft pulp (LUKP), bleached hardwood kraft pulp (LBKP), unbleached softwood sulfite pulp (NUSP), bleached softwood sulfite pulp (NBSP), thermomechanical pulp (TMP), recycled pulp, waste paper and the like. Although the cellulose base materials used in the present invention may be any one of these or combinations thereof, they are preferably cellulose base materials derived from plants or microorganisms (e.g., cellulose fibers), and more preferably, cellulose base materials derived from plants (e.g., cellulose fibers).

The number average fiber diameter of the cellulose base materials may be, but not specifically limited to, 30 to 60 $\mu$m for a typical softwood kraft pulp, and 10 to 30 $\mu$m for a hardwood kraft pulp. For other pulps, typically purified ones have a number average fiber diameter in the order of 50 $\mu$m. When materials produced by purifying chips or the like of several centimeters in size are used, for example, they are preferably mechanically processed by a breaker such as a refiner or beater to adjust the number average fiber diameter in the order of 50 $\mu$m.

(1-2) Modification

The cellulose base material has three hydroxy groups per glucose unit, and various chemical modifications can be carried out. Each of the chemically modified cellulose base materials or unmodified cellulose base materials can be used in the present invention. However, when the chemically modified cellulose base materials are used, since refinement of fibers proceeds sufficiently and cellulose nanofibers having homogenous fiber length and fiber diameter can be obtained, it can exhibit sufficient reinforcing effect when contained in the rubber compositions. Thus, the chemically modified cellulose base materials are preferred. The chemical modification may include, for example, oxidation, etherification, phosphation, esterification, silane coupling, fluorination, cationization or the like, among which oxidation (carboxylation), etherification, cationization and esterification are preferred. In the following, explanations on them are provided.

(1-2-1) Oxidation

The amount of carboxy group in oxidized cellulose and cellulose nanofibers obtained by the treatment is preferably 0.5 mmol/g or more, more preferably 0.8 mmol/g or more, and still more preferably 1.0 mmol/g or more per gram of bone dry cellulose. The upper limit of the amount is preferably 3.0 mmol/g or less, more preferably 2.5 mmol/g or less, and still more preferably 2.0 mmol/g or less. Therefore, as the amount, 0.5 to 3.0 mmol/g is preferred, 0.8 to 2.5 mmol/g is more preferred, and 1.0 to 2.0 mmol/g is still more preferred.

The oxidation method may include, but not specifically limited to, as an example, a method of oxidizing cellulose base material in water using an oxidizing agent in the presence of N-oxyl compound and a compound selected from the group consisting of a bromide, an iodide and a mixture thereof. This method allow the primary hydroxy group at the C6 position of the glucopyranose ring on the surface of the cellulose to be selectively oxidized to give a group selected from the group consisting of an aldehyde group, a carboxy group and a carboxylate group. During the reaction, the cellulose base materials content is not specifically limited, but preferably 5 % by weight or less.

The term "N-oxyl compound" refers to a compound capable of generating nitroxyl radicals. The nitroxyl radicals may include, for example, 2,2,6,6-tetramethylpiperidin 1-oxyl (TEMPO). Any N-oxyl compounds can be used so far as they promote the intended oxidation reaction. The amount of the N-oxyl compound used is not specifically limited so far as it is a catalytic amount enough to oxidize the cellulose used as a base material. The amount of the N-oxyl compound used is not specifically limited so far as it is a catalytic amount enough to oxidize the cellulose used as a base material. For example, it is preferably 0.01 mmol or more, and more preferably 0.02 mmol or more per gram of bone dry cellulose. The upper limit is preferably 10 mmol or less, more preferably 1 mmol or less, and still more preferably 0.5 mmol or less. Therefore, the amount of the N-oxyl compound used is preferably 0.01 to 10 mmol, more preferably 0.01 to 1 mmol, and still more preferably 0.02 to 0.5 mmol per gram of bone dry cellulose.

The term "bromide" refers to a compound containing bromine, and may include, for example, alkali metal bromides such as sodium bromide that can be ionized by dissociation in water. Similarly, the term "iodide" refers to a compound containing iodine, and may include, for example, alkali metal iodides. The amount of the bromide or iodide used can be selected in a range that can promote the oxidation reaction. The total amount of the bromide and iodide is preferably 0.1 mmol or more, and more preferably 0.5 mmol or more. The upper limit is preferably 100 mmol or less, more preferably 10 mmol or less, and still more preferably 5 mmol or less. Therefore, the total amount of the bromide and iodide is preferably 0.1 to 100 mmol, more preferably 0.1 to 10 mmol, and still more preferably 0.5 to 5 mmol per gram of bone dry cellulose.

The oxidizing agents may include, but not specifically limited to, for example, halogens, hypohalous acids, halous acids, perhalic acids, salts thereof, halogen oxides, peroxides and the like. Among them, hypohalous acids or the salts thereof is preferred, hypochlorous acid or the salts thereof is more preferred, and sodium hypochlorite is still more preferred because it is inexpensive and has a low environmental impact. The amount of the oxidizing agent used is preferably 0.5 mmol or more, more preferably 1 mmol or more, and still more preferably 3 mmol or more. The upper limit is preferably 500 mmol or less, more preferably 50 mmol or less, and still more preferably 25 mmol or less. Therefore, the amount of the oxidizing agent used is preferably 0.5 to 500 mmol, more preferably 0.5 to 50 mmol, still more preferably 1 to 25mmol, and particularly preferably 3 to 10 mmol per gram of bone dry cellulose. When the N-oxyl compound is used, the amount of the oxidizing agent used is preferably 1 mol or more, and the upper limit is preferably 40 mol per mol of the N-oxyl compound. Therefore, the amount of the oxidizing agent used is preferably 1 to 40 mol per mol of the N-oxyl compound.

The conditions such as pH, temperature or the like during the oxidation reaction is not specifically limited, and commonly, the oxidation reaction efficiently proceeds even under relatively mild conditions. The reaction temperature is preferably 4 °C or more, and more preferably, 15 °C or more. The upper limit of the temperature is preferably 40 °C or less, and more preferably 30 °C or less. Therefore, the reaction temperature is preferably 4 to 40 °C, and may be room temperature around 15 to 30 °C. The pH of the reaction solution is preferably 8 or more, and more preferably 10 or more. The upper limit of the pH is preferably 12 or less, and more preferably 11 or less. Therefore, the pH of the reaction solution is preferably 8 to 12, and more preferably 10 to 11. Typically, as the oxidation reaction proceeds, the pH of the reaction solution is prone to decrease because carboxy groups are generated in the cellulose. Thus, to ensure that the oxidation reaction efficiently proceeds, an alkaline solution such as an aqueous sodium hydroxide solution is preferably added to maintain the pH of the reaction solution in the above ranges. The reaction medium used in the oxidation is preferably water because it is easy to handle, less likely to cause side reactions and for other reasons.

The reaction period in the oxidation can be suitably selected depending on the extent to which oxidation proceeds, and is typically 0.5 hours or more, and the upper limit is typically 6 hours or less, preferably 4 hours or less. Therefore, the reaction period in the oxidation is typically 0.5 to 6 hours, for example around 0.5 to 4 hours. The oxidation may be carried out in two stages. For example, the oxidized cellulose filtered out after the completion of a first stage reaction can be oxidized again under the same or different reaction conditions, whereby the reaction is not inhibited by sodium chloride produced as a byproduct during the first stage reaction and efficient oxidation can be achieved.

Another example of a carboxylation (oxidation) method may include ozone-oxidation. This oxidation reaction allows the hydroxy groups at least at the 2- and 6-positions of the glucopyranose ring that forms cellulose to be oxidized and cellulose chains to be cleaved. Ozone treatment is carried out typically by contacting a cellulose base material with an ozone-containing gas. The ozone concentration in the gas is preferably 50 g/m$^3$ or more. The upper limit is preferably 250 g/m$^3$ or less, and more preferably 220 g/m$^3$ or less. Therefore, the ozone concentration in the ozone-containing gas is preferably 50 to 250 g/m$^3$, and more preferably 50 to 220 g/m$^3$. The amount of ozone added is preferably 0.1 parts by weight or more, and more preferably 5 % by weight or more per 100 % by weight of the solids content of the cellulose base material. The upper limit of the amount of ozone added is typically 30 % by weight or less. Therefore, the amount of ozone added is preferably 0.1 to 30 % by weight, and more preferably 5 to 30 % by weight based on 100 % by weight of the solids content of the cellulose base material. The ozonation temperature is typically 0 °C or more, and preferably 20 °C or more, and the upper limit typically 50 °C or less. Therefore, the ozonation temperature is preferably 0 to 50 °C, and more preferably 20 to 50 °C. The ozonation period is typically 1 minute or more, and preferably 30 minutes or more, and the upper limit is typically 360 minutes or less. Therefore, the ozonation period is typically in the order of 1 to 360 minutes, and preferably in the order of 30 to 360 minutes. When the ozonation conditions are within the above ranges, oxidized cellulose can be obtained with good yield because the cellulose can be prevented from being excessively oxidized and cleaved.

A post-oxidation treatment using an oxidizing agent may be further carried out to the ozonized cellulose. The oxidizing agent used for the post-oxidation is not specifically limited, but may include chlorine compounds such as chlorine dioxide and sodium chlorite; and oxygen, hydrogen peroxide, persulfuric acid, peracetic acid and the like. The methods of the post-oxidation treatment may include , for example, a method of dissolving one of these oxidizing agents in water or a polar organic solvent such as an alcohol to prepare a solution of the oxidizing agent and immersing the cellulose base material in the solution of the oxidizing agent. The amount of carboxy groups, carboxylate groups, and aldehyde groups in the oxidized cellulose fibers can be adjusted by controlling the reaction conditions such as the amount of the oxidizing agent added, the reaction period and the like.

An example of the method for measurement of the carboxy group content is explained in the following. 60 ml of a 0.5 % by weight slurry (aqueous dispersion) of oxidized cellulose is prepared and adjusted to pH 2.5 by adding a 0.1M aqueous hydrochloric acid solution, and then a 0.05N aqueous sodium hydroxide solution is added dropwise while the electric conductivity is measured until the pH reaches 11. The carboxy group content can be calculated from the equation below, wherein (a) is an amount of sodium hydroxide consumed during the neutralization stage of the weak acid characterized by a slow change in electric conductivity:

Carboxy group content [mmol/g oxidized cellulose or cellulose nanofibers] = a [ml] $\times$ 0.05 / weight [g] of oxidized cellulose.

(1-2-2) Etherification

The etherification may include carboxymethyl(etherific)ation, methyl(etherific)ation, ethyl(etherific)ation, cyanoethyl(etherific)ation, hydroxyethyl(etherific)ation, hydroxypropyl(etherific)ation, ethylhydroxyethyl(etherific)ation,, hydroxypropylmethyl(etherific)ation. Among them, a method for carboxymethylation is explained in the following as an example.

The degree of substitution with carboxymethyl group is preferably 0.01 or more, more preferably 0.05 or more, and still more preferably 0.10 or more per anhydrous glucose unit of carboxymethylated cellulose obtained by the carboxymethylation or cellulose nanofibers. The upper limit of the degree of substitution is preferably 0.50 or less, more preferably 0.40 or less, and still more preferably 0.35 or less. Therefore, the degree of substitution with carboxymethyl group is preferably 0.01 to 0.50, more preferably 0.50 to 0.40, and still more preferably 0.10 to 0.30.

A method for carboxymethylation may include, but not specifically limited to, for example, a method of mercerizing cellulose base materials as a starting material and then etherifying. Typically, a solvent is used in the reaction. The solvent may include, for example, water or an alcohol (e.g., a lower alcohol) or a mixed solvent thereof. The lower alcohol may include, for example, methanol, ethanol, n-propyl alcohol, isopropyl alcohol, n-butanol, isobutanol, tert-butanol. The mixing proportion of the lower alcohol in the mixed solvent is typically 60 % by weight or more and 95 % by weight or less, and preferably 60 to 95 % by weight. The amount of the solvent is typically an amount of 3 times the weight of the cellulose base materials. The upper limit of the amount is, but not specifically limited to, an amount of 20 times. Therefore, the amount of the solvent is preferably an amount of 3 to 20 times

Mercerization is typically carried out by mixing a starting material and a mercerizing agent. The mercerizing agent may include, for example, alkali metal hydroxides such as sodium hydroxide, potassium hydroxide and the like. The amount of the mercerizing agent used is preferably 0.5 molar equivalents or more, more preferably 1.0 molar equivalent or more, and still more preferably 1.5 molar equivalents or more per anhydrous glucose residue of the starting material. The upper limit of the amount is typically 20 molar equivalents or less, preferably 10 molar equivalents or less, and more preferably 5 molar equivalents or less. Therefore, the amount of the mercerizing agent used is preferably 0.5 to 20 molar equivalents, more preferably 1.0 to 10 molar equivalents, and still more preferably 1.5 to 5 molar equivalents.

The reaction temperature of the mercerization is typically 0 °C or more and preferably 10 °C or more, and the upper limit is typically 70 °C or less and preferably 60 °C or less. Therefore, the reaction temperature is typically 0 to 70 °C, and preferably 10 to 60 °C. The reaction period is typically 15 minutes or more, and preferably 30 minutes or more. The upper limit of the period is typically 8 hours or less, and preferably 7 hours or less. Therefore, the reaction period is typically 15 minutes to 8 hours, and preferably 30 minutes to 7 hours.

An etherification reaction is typically carried out by adding a carboxymethylating agent to the reaction system after the mercerization. The carboxymethylating agent may include, for example, sodium chloroacetate. The amount of the carboxymethylating agent added is typically, preferably 0.05 molar equivalents or more, more preferably 0.5 molar equivalents or more, and still more preferably 0.8 molar equivalents or more per glucose residue of the cellulose base material. The upper limit of the amount is typically 10.0 molar equivalents or less, preferably 5 molar equivalents or less, and more preferably 3 molar equivalents or less. Therefore, the amount is preferably 0.05 to 10.0 molar equivalents, more preferably 0.5 to 5 molar equivalents, and still more preferably 0.8 to 3 molar equivalents. The reaction temperature is typically 30 °C or more and preferably 40 °C or more, and the upper limit is typically 90 °C or less and preferably 80 °C or less. Therefore, the reaction temperature is typically 30 to 90 °C, and preferably 40 to 80 °C. The reaction period is typically 30 minutes or more, and preferably 1 hour or more, and its upper limit is typically 10 hours or less and preferably 4 hours or less. Therefore, the reaction period is typically 30 minutes to 10 hours, and preferably 1 hour to 4 hours. The reaction solution may be stirred during the carboxymethylation reaction if desired.

The degree of substitution with carboxymethyl group per glucose unit of a carboxymethylated cellulose nanofiber can be determined, for example, by the following method. That is, 1) add precisely weighed about 2.0 g of a carboxymethylated cellulose (bone dry) into a 300-mL Erlenmeyer flask with a ground glass stopper. 2) Add 100 mL of a solution prepared by adding 100 mL of special grade concentrated nitric acid to 1000 mL of methanol, and agitate the mixture for 3 hours to convert the carboxymethyl cellulose salt (carboxymethylated cellulose) into a hydrogen-substituted carboxymethylated cellulose. 3) Add precisely weighed 1.5 to 2.0 g of the hydrogen-substituted carboxymethylated cellulose (bone dry) into a 300-mL Erlenmeyer flask with a ground glass stopper. 4) Wet the hydrogen-substituted carboxymethylated cellulose with 15 mL of 80 % methanol, and add 100 mL of 0.1N NaOH, and agitate the mixture at room temperature for 3 hours. 5) Using phenolphthalein as an indicator, back-titrate the excess of NaOH with 0.1N $H_2SO_4$. 6) Calculate

the degree of substitution with carboxymethyl group (DS) by the equation below:

$$A = [(100 \times F' - (0.1N\ H_2SO_4)\ (mL) \times F) \times 0.1] / (\text{bone dry mass (g) of hydrogen-substituted carboxymethylated cellulose})$$

$$DS = 0.162 \times A / (1 - 0.058 \times A)$$

A: the amount of IN NaOH (mL) required for neutralizing 1 g of the hydrogen-substituted carboxymethylated cellulose
F: the factor of 0.1N $H_2SO_4$
F': the factor of 0.1N NaOH.

(1-2-3) Cationization

Cationized cellulose nanofibers obtained by the cationization may have cations such as ammonium, phosphonium or sulfonium, or a group containing the cations in the molecules. The cationized cellulose nanofibers have preferably an ammonium-containing group, and more preferably a quaternary ammonium-containing group.

Methods for cationization may include, but not specifically limited to, for example, a method of reacting cellulose base materials with a cationizing agent and a catalyst in the presence of water or alcohol. The cationizing agent may include, for example, glycidyltrimethylammonium chloride, 3-chloro-2-hydroxypropyltrialkylammonium halide (example: 3-chloro-2-hydroxypropyltrimethylammonium halide) or a halohydrin form thereof, by using any of which a cationized cellulose having a quaternary ammonium-containing group can be obtained. The catalyst may include, for example, alkali metal hydroxides such as sodium hydroxide, potassium hydroxide and the like. The alcohol may include, for example, alcohols containing 1 to 4 carbon atoms. The amount of the cationizing agent is preferably 5 % by weight or more based on 100 % by weight of the cellulose base materials, and more preferably 10 % by weight or more. The upper limit of the amount is typically 800 % by weight or less, and preferably 500 % by weight or less. The amount of the catalyst is preferably 0.5 % by weight or more based on 100 % by weight of the cellulose fibers, and more preferably 1 % by weight or more. The upper limit of the amount is typically 7 % by weight or less, and preferably 3 % by weight or less. The amount of the alcohol is preferably 50 % by weight or more based on 100 % by weight of the cellulose fibers, and more preferably 100 % by weight or more. The upper limit of the amount is typically 50000 % by weight or less, and preferably 500 % by weight or less.

The reaction temperature during cationization is typically 10 °C or more and preferably 30 °C or more, and the upper limit is typically 90 °C or less and preferably 80 °C or less. The reaction period is typically 10 minutes or more and preferably 30 minutes or more, and the upper limit is typically 10 hours or less and preferably 5 hours or less. The reaction solution may be stirred during the cationization reaction if desired.

The degree of substitution with cationic group per glucose unit of the cationized cellulose can be adjusted by the amount of the cationizing agent added or the proportion of water or the alcohol. The term "degree of substitution with cationic group" refers to the number of substituents introduced per unit structure forming a cellulose (glucopyranose ring). In other words, it is defined as "the value obtained by dividing the number of moles of substituents introduced by the total number of moles of hydroxy groups of the glucopyranose ring". Given that pure celluloses contain three substitutable hydroxy groups per unit structure (glucopyranose ring), the theoretical maximum degree of substitution with cationic group is 3 (minimum 0).

The degree of substitution with cationic group per glucose unit of the cationized cellulose nanofibers is preferably 0.01 or more, more preferably 0.02 or more, and still more preferably 0.03 or more. The upper limit of the degree of substitution is preferably 0.40 or less, more preferably 0.30 or less, and still more preferably 0.20 or less. Therefore, the degree of substitution with cationic group is preferably 0.01 to 0.40, more preferably 0.02 to 0.30, and still more preferably 0.03 to 0.20. When a cationic substituent is introduced into cellulose fibers, the cellulose fibers electrically repel each other. Therefore, the cellulose fibers into which a cationic substituent has been introduced can be readily disintegrated into nanofibers. When the degree of substitution with cationic group per glucose unit is 0.01 or more, they can be sufficiently disintegrated into nanofibers. On the other hand, when the degree of substitution with cationic group per glucose unit is 0.40 or less, swelling or dissolution can be inhibited whereby a fibrous shape can be maintained, and therefore it enables to prevent from not to be formed into nanofibers.

An example of measurement methods for the degree of substitution with cationic group per glucose unit is explained in the following. The nitrogen content is determined by using the total nitrogen analyzer TN-10 (from Mitsubishi Chemical Corporation) after a sample (a cationized cellulose) has been dried. For example, when 3-chloro-2-hydroxypropyltrimethylammonium chloride is used as a cationizing agent, the degree of cationization is calculated by the following equation. The term "degree of substitution with cationic group " used herein refers to the average of the number of moles of substituents per mole of an anhydrous glucose unit.

$$\text{Degree of substitution with cationic group} = (162 \times N) / (1 - 116 \times N)$$

N: Nitrogen content per gram of cationized cellulose (mol)

(1-2-4) Esterification

Methods for esterification may include, but not specifically limited to, for example, a method of reacting cellulose-based base materials with compound A described below. The method of reacting the cellulose-based base materials with the compound A may include, for example, a method of mixing the cellulose-based base materials with powder or aqueous solution of the compound A or a method of adding an aqueous solution of the compound A to a slurry of the cellulose-based base materials. Among others, a method of mixing the cellulose-based base materials or the slurry thereof with the aqueous solution of compound A is preferred because it improves homogeneousness in reaction and increases the efficiency of esterification.

The compound A may include, for example, phosphoric acid, polyphosphoric acid, phosphorus acid, phosphonic acid, polyphosphonic acid and esters thereof. The compound A may be in the form of salt. Among the above, phosphate compound is preferred because it is low-cost, easy to handle and possible to improve the efficiency of disintegration. The phosphate compound may be a compound having phosphate group, for example, phosphoric acid, sodium dihydrogen phosphate, disodium hydrogen phosphate, trisodium phosphate, sodium pyrophosphate, sodium metaphosphate, potassium dihydrogen phosphate, dipotassium hydrogen phosphate, tripotassium phosphate, potassium pyrophosphate, potassium metaphosphate, ammonium dihydrogen phosphate, diammonium hydrogen phosphate, triammonium phosphate, ammonium pyrophosphate, ammonium metaphosphate. The phosphate compound used may be one or combinations of two or more of them. Among others, in view of high efficiency of introduction of phosphate group, ability of disintegration in disintegration step, and industrial applicability, phosphoric acid, sodium salts of phosphoric acid, potassium salts of phosphoric acid, and ammonium salts of phosphoric acid are preferred, and sodium dihydrogen phosphate and disodium hydrogen phosphate are more preferred. In addition, an aqueous solution of phosphate compound is preferably used in esterification because it improves homogeneousness in reaction and increases the efficiency of introduction of phosphate group. A pH of the aqueous solution of phosphate compound is preferably 7 or less in view of increasing efficiency of introduction of phosphate group, and more preferably 3 to 7 in view of inhibiting hydrolysis of pulp fibers.

Methods for esterification may include, for example, the following method. The compound A is added with stirring to a suspension of cellulose-based base materials (e.g., solids content of 0.1 to 10 % by weight) to introduce phosphate groups to cellulose. When the compound A is a phosphate compound, as the amount of phosphorus element, the amount of compound A added is such that the amount of phosphorus element is preferably 0.2 parts by weight or more, and more preferably 1 part by weight or more based on 100 parts by weight of the cellulose-based base materials, whereby it enables to improve the yield of cellulose in the fine fiber form. The upper limit of the amount is preferably 500 parts by weight or less, and more preferably 400 parts by weight or less, whereby it enables to efficiently achieve the yield measured up to the amount of compound A used. Therefore, 0.2 to 500 parts by weight is preferred, and 1 to 400 parts by weight is more preferred.

When reacting the cellulose-based base materials and compound A, compound B may be further added to the reaction system. Methods for adding the compound B to the reaction system may include, for example, a method of adding it to a slurry of the cellulose-based base materials, an aqueous solution of the compound A or a slurry of the cellulose-based base materials and compound A. The compound B is, but not specifically limited to, preferably basic, and more preferably a nitrogen-containing compound showing basicity. The term "showing basicity" typically refers to that an aqueous solution of the compound B exhibits pink to red color in the presence of phenolphthalein indicator or an aqueous solution of the compound B has a pH of larger than 7. The nitrogen-containing compound showing basicity is, but not specifically limited to so far as the advantageous effects of the present invention is achieved, preferably a compound having an amino group. For example, it may include urea, methylamine, ethylamine, trimethylamine, triethylamine, monoethanolamine, diethanolamine, triethanolamine, pyridine, ethylenediamine, hexamethylenediamine. Among them, urea is preferred from the point of low cost and easy handling. The amount of compound B added is preferably 2 to 1000 parts by weight, and more preferably 100 to 700 parts by weight. The reaction temperature is preferably 0 to 95 °C, and more preferably 30 to 90 °C. The reaction period is, but not specifically limited to, typically in the order of 1 to 600 minutes, and preferably 30 to 480 minutes. When the conditions of esterification reaction is in any one of these ranges, it can prevent the cellulose from being excessively esterified to be easily dissolved, whereby it enables to improve the yield of phosphoestered cellulose.

After reacting the cellulose-based base materials and compound A, typically a suspension of esterified cellulose is obtained. The suspension of esterified cellulose is dehydrated if desired. Heating treatment is preferably carried out after dehydration, whereby hydrolysis of the cellulose-based base materials can be controlled. The heating temperature is preferably 100 to 170 °C, and more preferably heating at 130 °C or less (still more preferably 110 °C or less) during containing water in the heating treatment and heating treatment at 100 to 170 °C after the water is removed.

In the phosphoesterified cellulose, a phosphate-group substituent group is introduced into cellulose base materials, and the cellulose electrically repel each other. Therefore, the phosphoesterified cellulose can be readily disintegrated into nanofibers. The degree of substitution with phosphate-group per glucose unit of the phosphoesterified cellulose is preferably 0.001 or more, whereby sufficient disintegration (e.g., disintegration into nanofibers) can be achieved. The upper limit of the degree of substitution is preferably 0.60, whereby swelling or dissolution of the phosphoesterified cellulose is prevented, and it enables to prevent from not obtaining nanofibers. Therefore, the degree of substitution is preferably 0.001 to 0.60. The phosphoesterified cellulose is preferably wash treated such as washing with cold water after boiling, whereby disintegration can be carried out effectively.

(1-3) Disintegration

Disintegration of cellulose base materials may be carried out before or after chemically modifying the cellulose base materials. Disintegration treatment may be carried out once or more times. When the disintegration treatment is carried out multiple times, it may be carried out between any steps.

An apparatus used for disintegration may include, but not specifically limited to, for example, types of apparatuses such as a high speed rotary machine, a colloid mill machine, a high pressure machine, a roll mill machine, an ultrasonic machine or the like, and is preferably a high pressure or ultra-high pressure homogenizer, and more preferably a wet type high pressure or ultra-high pressure homogenizer. The apparatus can preferably apply a high shear force to cellulose base materials or modified cellulose (typically a dispersion). The pressure that the apparatus can apply is preferably 50 MPa or more, more preferably 100 MPa or more, and still more preferably 140 MPa or more. The apparatus is preferably a wet type high pressure or ultra-high pressure homogenizer that can apply the above pressure and the high shear force to the cellulose base materials or modified cellulose (typically a dispersion), whereby the disintegration can be carried out effectively.

When disintegrating cellulose base materials in a dispersion, the solid content of the cellulose base materials in the dispersion is typically 0.1 % by weight or more, preferably 0.2 % by weight or more, and more preferably 0.3 % by weight or more, whereby the amount of liquid becomes adequate to the amount of the cellulose fiber base materials, and thus it is efficient. The upper limit of the content is typically 10 % by weight or less, and preferably 6 % by weight or less, whereby flowability can be maintained.

If desired, prior to disintegration (preferably disintegration with the high pressure homogenizer) or dispersion process carried out before disintegration as necessary, a pretreatment may be carried out. The pretreatment can be carried out by using a mixing, stirring, emulsifying or dispersing apparatus such as a high speed shear mixer.

(1-4) Filtration

In the present invention, a dispersion of cellulose nanofibers is filtrated under pressure or under reduced pressure with a filtration pressure differential of 0.01 MPa or more. A cellulose nanofiber content in the dispersion of cellulose nanofibers subjected to the filtration is 0.1 to 5 % by weight, preferably 0.2 to 4 % by weight, and more preferably 0.5 to 3 % by weight. Filtrating under the filtration pressure differential enables to achieve a sufficient filtration throughput although the concentration or viscosity of the dispersion of cellulose nano fibers is high. The filtration pressure differential is preferably 0.01 to 10 MPa. When the differential is less than 0.01 MPa, the sufficient filtration throughput cannot be achieved, and it requires considerable dilution in order to achieve the filtration throughput, and thus, is not preferable considering the following steps. An apparatus for filtration may include Nutsche type, candle type, leaf disc type, drum type, filter press type, belt filter type and the like.

The filtration throughput is preferably 10 L/m$^2$ or more per hour, and more preferably 100 L/m$^2$ or more. Methods for filtration may include aid-using filtration in which filtrating aid is used, media filtration in which a porous filter medium is used. The method can be suitably selected in the present invention, and the above two methods for filtration may be used concurrently. In such case, a sequence of the method for filtration can be selected optionally. In addition, when two or more filtration steps are carried out, although any one of the filtration steps should be carried out with the filtration pressure differential, all of the filtration steps may be carried out with the filtration pressure differential. In the following, the filtration aid and filter medium is explained in detail.

(1-4-1) Filtration aid

The aid-using filtration with filtrating aid is preferred because it can readily solve clogging of a filter medium caused by filtration treatment by removing a filtration layer formed by the filtration aid, whereby continuous filtration treatment can be achieved. The filtration agent is preferably a granulated substance having an average particle size of 150 μm or less, more preferably a granulated substance of 1 to 150 μm, still more preferably a granulated substance of 10 to 75 μm, even still more preferably a granulated substance of 15 to 45 μm, and especially preferably a granulated substance of 25 to 45 μm. When the average particle size is smaller than that, a filtration rate is decreased, and when the particle size is larger than that, the effect of the filtration treatment cannot be obtained because it cannot completely capture contaminants. As mentioned below, although the filtration aid may be a round globular shape such as diatomaceous earth or a bar shape such as powdered cellulose, for both cases, the average particle size can be determined by a laser diffraction measuring instrument according to JIS Z8825-1.

The aid-using filtration with a filtration aid may be carried out by any of precoat filtration in which a layer of the filtration aid is formed on a filter medium or body-feed filtration in which the filtration aid is premixed with a dispersion of cellulose nanofibers before filtrating it, however, it is more preferred to combine both because it improves the throughput and makes the quality of filtrate favorable. Similarly, the filtration with filtrating aid may be carried out with multistage by changing the kind of filtrating aid. When carrying out two or more filtration steps with using the filtration aid, although any one of the filtration steps should be carried out with the filtration pressure differential, all of the filtration steps may be carried out with the filtration pressure differential. Any of inorganic compound and organic compound may be used as the filtration aid, a granulated one is preferred. Preferable examples may include diatomaceous earth, powdered cellulose, pearlite, activated carbon or the like. In the following, as an example, the diatomaceous earth and powdered cellulose are explained in detail.

(1-4-1-1) Diatomaceous earth

The term "diatomaceous earth" refers to soft rock or clod comprised of mainly frustule of diatom, and although the main component is silica, it may contain alumina, iron oxide, an oxide of alkaline metal and the like other than silica. Similarly, diatomaceous earth that is porous and has high porosity and whose cake bulk density is in the order of 0.2 to 0.45 g/cm$^3$ is preferred. Among diatomaceous earth, calcined product or flux calcined product is preferred, and freshwater diatomaceous earth is more preferred, however, other diatomaceous earth can be used. Examples of such diatomaceous earth may include Celite (registered trademark) from Celite Corporation and Celatom (registered trademark) from Eagle-Picher Minerals Inc..

(1-4-1-2) Powdered cellulose

The term "powdered cellulose" refers to rod-shaped particle comprised of microcrystalline cellulose obtained by after removing amorphous portions of wood pulp by acid hydrolysis treatment, crushing and sieving it. The degree of polymerization of cellulose in the powdered cellulose is preferably in the order of 100 to 500, the degree of crystallization of the powdered cellulose is preferably 70 to 90 % by X-ray diffraction method, and volumetric average particle size is preferably 100 μm or less, and more preferably 50 μm or less determined by laser diffraction particle size distribution measurement instrument. When the volumetric average particle size is 100 μm or less, a dispersion of cellulose nanofibers having superior flowability can be obtained. The powdered cellulose of the present invention may include, for example, rod-shaped powdered crystalline cellulose having a specified particle size distribution prepared by a method of purifying and drying undecomposed residue obtained after acid hydrolysis of selected pulp and crushing and sieving it, KC FLOCK (registered trademark) from Nippon Paper Industries Co., Ltd., CEOLUS (registered trademark) from Asahi Kasei Chemicals Corporation, and Avicel (registered trademark) from FMC Corporation.

(1-4-2) Filter medium

The filter medium may include a filter comprised of materials such as metallic fiber, cellulose, polypropylene, polyester, nylon, glass, cotton, polytetrafluoroethylene, polyphenylene sulfide, a membrane, filter cloth, a filter formed by sintering metallic powder, or a slit-shaped filter. Among them, in particular, a metallic filter and a membrane filter are preferred.

The preferable average pore size is not specifically limited when using in combination of the above filtration aid, and any of known filter medium can be used. When filtrating with only the filter medium without using the above filtration aid in combination, on the other hand, an average pore size of the filter medium is preferably 0.01 to 100 μm, more preferably 0.1 to 50 μm, and more preferably 1 to 30 μm. When the average pore size is smaller than this, a sufficient filtration rate cannot be obtained, and when it is larger than this, the effect of the filtration cannot be obtained because it cannot completely capture the filtration aid.

(1-5) Form of cellulose nanofibers

The form of cellulose nanofibers mixed with rubber component is not specifically limited. For example, a dispersion of cellulose nanofibers after the filtration treatment, dry solid material of the dispersion, wet solid material of the dispersion, mixed liquid of cellulose nanofibers obtained through the filtration treatment and a water-soluble polymer, dry solid material of the mixed liquid, wet solid material of the mixed liquid and the like may be mixed with the rubber component. The term "wet solid material" refers to a solid material in the form of intermediate of the dispersion and the dry solid material. The water-soluble polymer may include, for example, cellulose derivatives (carboxymethylcellulose, methylcellulose, hydroxypropylcellulose, ethylcellulose), xanthane gum, cycloglucan, dextrin, dextran, carrageenan, locust bean gum, alginic acid, alginate salt, pullulan, starch, potato starch, kudzu powder, cationic starch, starch phosphate, cornstarch, gum arabic, locust bean gum, gellan gum, polydextrose, pectin, chitin, water-soluble chitin, chitosan, casein, albumin, soy protein hydrolysate, peptone, polyvinyl alcohol, polyacrylamide, sodium polyacrylate, polyvinylpyrrolidone, polyvinyl acetate, polyamino acids, polylactic acid, polymalic acid, polyglycerin, latex, rosin sizing agents, petroleum resin sizing agents, urea resins, melamine resins, epoxy resins, polyamide resins, polyamide-polyamine resins, polyethyleneimines, polyamines, plant gums, polyethylene oxide, hydrophilic crosslinked polymers, polyacrylates, starch-polyacrylic acid copolymers, tamarind gum, gellan gum, pectin, guar gum and colloidal silica as well as mixtures of one or more of them. Among them, carboxymethyl cellulose and a salt thereof are preferably used because of the solubility.

The dry solid material and wet solid material of cellulose nanofibers can be prepared by drying a dispersion of cellulose nanofibers after the filtration treatment or a mixed liquid of cellulose nanofibers and a water-soluble polymer. A method of drying may include, but not specifically limited to, for example, spray drying, squeezing, air drying, hot air drying, and vacuum drying. The dryer may include, for example, continuous tunnel dryers, band dryers, vertical dryers, vertical turbo dryers, multistage disc dryers, ventilation dryers, rotary dryers, pneumatic conveying dryers, spray dryers, atomizing dryers, cylinder dryers, drum dryers, screw conveyor dryers, rotary dryers with heating tubes, oscillating conveyor dryers, batch tray dryers, ventilation dryers, vacuum tray dryers, and agitated dryers. These dryers may be used alone or as a combination of two or more of them. The drum dryers are preferred because they have high energy efficiency since they can supply heat energy directly and uniformly to an object to be dried, and the dried object can be immediately collected without being heated more than necessary.

(1-6) Methods for evaluating contaminants in cellulose nanofibers

A dispersion of cellulose nanofibers after the filtration treatment used in the present invention preferably has 25 % or less of contaminant area ratio when the amount of contaminants is evaluated by the following method, and more preferably has 4 % or less of contaminant area ratio. In the following, the method of evaluation is explained

(1-6-1) The step of forming a film of dispersion of cellulose nanofibers

A sample (specimen) for evaluation is prepared by forming a film of a dispersion of cellulose nanofibers after filtration. Methods for forming a film of dispersion of cellulose nanofibers may include, for example, a method of forming a film by applying the dispersion on a substrate and drying this coating film. Then, a sample for evaluation is obtained by peeling the coating film from the substrate. The resultant film (a cellulose nanofiber film) is superior in physical strength and has high transparency.

The substrate is not specifically limited, and may be suitably selected from commonly used various sheet-shaped substrates (including film-shapes ones). The materials for such substrates may include, for example, paper, a cardboard, biodegradable plastics such as polylactic acid, polyolefin resins (polyethylene, polypropylene and the like), polyester resins (polyethylene terephthalate (PET), polybutylene terephthalate, polyethylene naphthalate and the like), polyamide resins (nylon-6, nylon-66 and the like), polyvinyl chloride resins, polyimide resins, and copolymers of any two or more of monomers composing these polymers.

The solid content of dispersion of cellulose nanofibers for preparing a sample is not specifically limited, for example, in the order of 0.01 to 10 % by weight, and preferably in the order of 0.1 to 2 % by weight. When the solid content is too much low, accuracy of image observation is decreased because the amount of contaminants is reduced although the contaminants such as aggregation substances are contained. When the solid content is too much high, on the other hand, the accuracy of image observation is decreased because it will be difficult to remove bubbles due to high viscosity of the dispersion.

The method for forming the film is not specifically limited, and known methods such as coating methods or casting methods may be used. The coating methods may include gravure coat method, gravure reverse coat method, roll coat method, reverse roll coat method, micro gravure coat method, comma coat method, air knife coat method, bar coat method, mayer bar coat method, dip coat method, dye coat method, and spray coat method, and any of the methods may be used.

Drying conditions of the film may be anyone that can remove aqueous solvent in the film, and is not specifically limited. The temperature during drying is typically 0 to 200 °C, preferably 0 to 100 °C, and more preferably room temperature. Similarly, although pressure conditions during drying may be suitably configured, typically it is carried out in the condition of air drying or the like under ambient pressure. Similarly, although drying periods may be suitably configured, it is for example 1 minutes to 7 days, and typically 3 hours or more is preferred. The upper limit of the drying temperature and drying period may be suitably configured considering a solid content of dispersion of cellulose nanofibers, kinds of aqueous solution used, drying period or the like.

The thickness of cellulose nanofiber film obtained by the above method is suitably configured depending on the solid content of the dispersion of cellulose nanofibers or drying conditions, however, in the present invention, it is preferred in the range of, for example, in the order of 0.1 $\mu$m to 10 mm. When the film thickness is less than 0.1 $\mu$m, it is possible to be influenced by the substrate (unevenness of the surface), and thus, affected by refraction of light. When the film thickness is larger than 10 mm, it is possible that transmitted light is reduce. In either case, accuracy of image observation is reduce.

The size of the cellulose nanofiber film is not specifically limited, but from the point of enhancing reliability of the evaluation to be able to observe wide areas as much as possible at one time, for example, in the order of 5 cm $\times$ 5 cm to 50 cm $\times$ 50 cm is preferred.

In order to enhance measurement accuracy, a dispersion of cellulose nanofibers for preparing the samples is preferred to contain a surface tension adjustor. Apart from this, the dispersion may contain other components so far as the effect of the present invention is impaired if desired. The other components are not specifically limited, and can be suitably selected from known additives. Specifically, it may include antifoaming agent, water-soluble polymer, synthetic polymer, orientation promotor, crosslinking agent or the like.

As the surface tension adjustor, for example, polyethyleneglycol (PEG), aliphatic acid sodium, alkyltrimethylammonium salt, alkyldimethylamineoxide, polyoxyethylenealkylether, alkylmonoglycerylether, polyvinylalcohol, sodium polyacrylate and the like may be used. The surface tension adjustor may be anionic, cationic or nonionic, and selected not to occur aggregation to electrical charge of cellulose nanofibers provided by chemical modification. Among the examples above, nonionic polyethyleneglycol (PEG) is particularly preferred because the aggregation does not occur whether the modified cellulose nanofibers are anionically modified or cationically modified.

In the present invention, the amount of the surface tension adjustor added is preferably in the range of 25 to 1500 parts by weight based on 100 parts by weight of bone dry weight of cellulose nanofibers. When the amount added is less than 25 parts by weight, it will be difficult to observe because smoothness cannot be obtained when formed as a film, and the above effect is not fully achieved. When the amount added exceeds 1500 parts by weight, on the other hand, it will be difficult to observe because strength of the film is weakened and the solid content of cellulose nanofibers is reduced, and thus it may cause a problem not to obtain preferable observation image due to lowering the accuracy of image. As stated above, the amount of the surface tension adjustor added is more preferably in the range of 50 to 1000 parts by weight, and still more preferably 100 to 500 parts by weight.

The sample for evaluation may be a single layer sheet composed of only the cellulose nanofiber film, further, may be a multi-layer sheet having other layers other than the cellulose nanofiber film. As mentioned above, the single layer sheet can be obtained by peeling the coating film of cellulose nanofibers formed on the substrate from the substrate.

Similarly, the multi-layer film can be prepared by forming the cellulose nanofiber sheet directly on other layers, or stacking the single layer sheet and other sheets. In the latter case, the single layer sheet and other sheets may be stacked by using an adhesive or stacked directly.

Apart from this, convenient methods for preparing the coating film of cellulose nanofibers without using an apparatus such as coaters may include a method of installing a suitable frame body on the substrate and casting a dispersion of cellulose nanofibers to this frame body to dry it.

Similarly, the sample is not necessarily a cellulose nanofiber film (dried film), for example, a film formed by casting the dispersion of cellulose nanofibers to a substrate such as a glass plate on which a frame is set or a petri dish made of glass to prepare a film as in a liquid form may be used as a sample. Although an oriented film such as a stretched film is not suitable to such substrates because it affects polarization, any kind of films can be used so far as they do not affect polarization. Glass is particularly preferred as the substrate.

Above steps of forming a film is preferred to be carried out in an environment that keeps the degree of cleanliness such as in a clean room due to possibility of contaminating dusts for example during drying. Similarly, a dryer may be installed in a clean room, and a clean dryer may be used.

(1-6-2) Step of obtaining an image

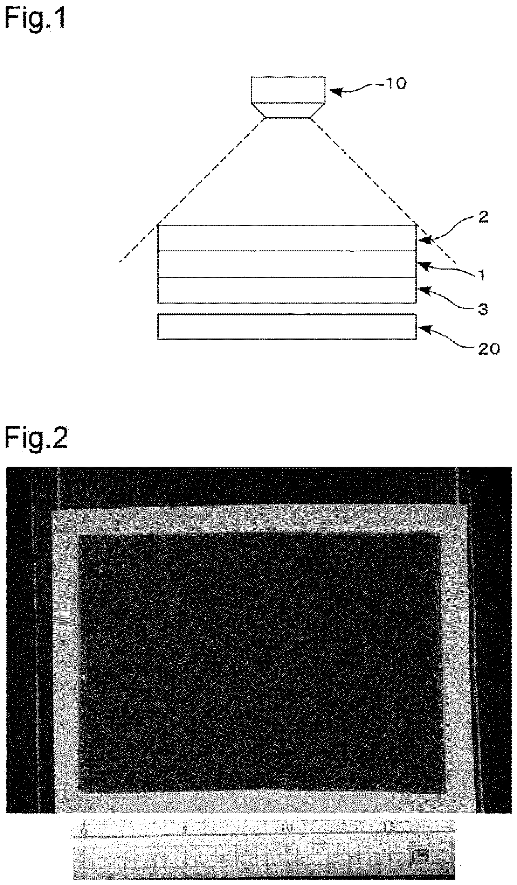

An example of the step is shown in Fig. 1. The film (e.g., a cellulose nanofiber film) is specimen 1, and polarizing plates 2 and 3 are arranged on both of each side (front side and back side) of specimen 1. These a pair of polarizing plates 2 and 3 are arranged so that the directions of polarizing axes are orthogonalize with each other. Light source 20 is arranged beneath one polarizing plate (polarizing plate 3 in the lower side of Fig. 1) and exposes light upward from the light source 20. And, an image is obtained by shooting a transmitted image by imaging device 10 arranged above the other polarizing plate (polarizing plate 2 in the upper side of Fig. 1).

The material, structure or the like of polarizing plates 2 and 3 is not specifically limited. The size of polarizing plates 2 and 3 is at least to cover whole specimen 1. In view of controlling irregular reflection, it is preferred to arrange each of polarizing plates 2 and 3 to adhere to both sides of specimen 1.

A common digital camera can be used as imaging device 10. Similarly, modes or speeds are not specifically limited when shooting, it is preferred to shoot under high resolution conditions as much as possible. It is preferred to fix cameras in using with ISO speed of in the order of 200 to 800 in manual mode, and keeping a shooting distance to the extent that the focus is not blurred. The accuracy improves with more pixel counts of cameras, and the ones with 10 million pixels or more are preferred.

Although light source 20 may be a point light source or a planer (plate-shaped) light source, a planer light source is preferred in order to expose light evenly to a relatively wide area.

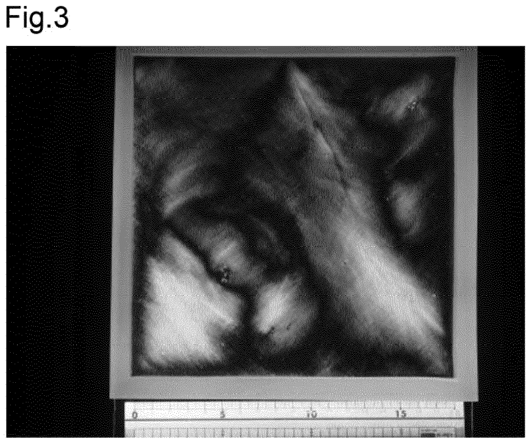

When specimen 1 is sandwiched with two polarizing plates 2 and 3 arranged in the direction to orthogonalize the polarizing axes with each other and light is exposed from the lower side, normally nothing is observed. When contaminants such as undisintegrated fibers are included in specimen 1, however, the polarization plane is rotated by the contaminants, and a light image derived from contaminants is injected from the above polarizing plates 2, and thus, existence of the contaminants can be observed. In particular, as an embodiment shown in Fig. 1, by sandwiching specimen 1 between two polarizing plates 2 and 3, and shooting with a camera or the like from immediately above of them, an image to readily observe existence of contaminants can be obtained. Fig. 2 shows an example of image shot. White dots appeared in the image show existence of contaminants. When a surface tension adjustor is not added to a dispersion of cellulose nanofibers, an image shown in Fig. 3 is observed. The whole image is blurred, and it is not possible to determine contaminants clearly even if they are included.

(1-6-3) Step of determining contaminants

Whether contaminants are included or not in specimen 1 is determined based on the image shot in the above step. When contaminants are included in specimen 1, whether contaminants that were not previously judged visually are included in a dispersion of cellulose nanofibers can be readily determined because their existence can be observed on the image. Similarly, as stated above, because the size of specimen 1 may be configured optionally, a wide area of sample can be measured at one time, and it is possible to carry out convenient and reliable evaluation.

An area ratio of contaminants can be calculated by image analysis of the resultant image. Any software for image analysis may be used to carry out the image analysis. For example, software such as ImageJ developed by Mr. Wayne Rasband may be used, but not specifically limited to this. This evaluation method enables to objectively evaluate a ratio of contaminants in a dispersion of cellulose nanofibers by quantification.

(2) Rubber components

The term "rubber component" refers to a raw material of a rubber, which is crosslinked to form the rubber. There exist rubber components for natural rubbers and rubber components for synthetic rubbers, and either may be used or both may be combined in the present invention. For simplicity, rubber components for natural rubbers or the like are referred to as "natural rubber polymers" or the like.

Natural rubber (NR) polymers include natural rubber polymers in the narrow sense that have not been chemically modified; chemically modified natural rubber polymers such as chlorinated natural rubber polymers, chlorosulfonated natural rubber polymers, and epoxidized natural rubber polymers; hydrogenated natural rubber polymers; and deproteinized natural rubber polymers. Synthetic rubber polymers include, for example, diene rubber polymers such as butadiene rubber (BR) polymers, styrene-butadiene copolymer rubber (SBR) polymers, isoprene rubber (IR) polymers, acrylonitrile-butadiene rubber (NBR) polymers, chloroprene rubber polymers, styrene-isoprene copolymer rubber polymers, styrene-isoprene-butadiene copolymer rubber polymers, and isoprene-butadiene copolymer rubber polymers; and non-diene rubber polymers such as butyl rubber (IIR) polymers, ethylene-propylene rubber (EPM, EPDM) polymers, acrylic rubber (ACM) polymers, epichlorohydrin rubber (CO, ECO) polymers, fluorinated rubber (FKM) polymers, silicone rubber (Q) polymers, urethane rubber (U) polymers, and chlorosulfonated polyethylene (CSM) polymers. These rubber polymers may be used alone or in combination. Among them, NBR polymers, NR polymers, SBR polymers and chloroprene rubber polymers are particularly preferred.

Although the rubber components may be directly subjected to mixing, they may be subjected to mixing as a dispersion (latex) in which the rubber components are dispersed in a dispersion medium or a solution in which the same are dissolved in a solvent. The dispersion medium and the solvent (hereinafter collectively referred to as "liquid medium") may include, for example, water and organic solvents. The amount of liquid medium is preferably 10 to 1000 parts by weight based on 100 parts by weight of rubber component.

(3-1) Mixing of cellulose nanofibers and rubber components

Methods of mixing cellulose nanofibers with rubber components are not specifically limited to. As an example, both may be mixed by mixing a water dispersion of cellulose nanofibers with a water dispersion of rubber components (latex) with mixers or the like and after removing water, kneading the mixture with open roll mills or the like. The method enables the cellulose nanofibers to be homogenously dispersed in the rubber components. Methods of removing water are not specifically limited to, and may be carried out by previously known methods. For example, methods of drying the mixture with dryers such as ovens or methods of coagulating the mixture by adding acids or salts and then dehydrating, washing, and drying it. The formulation ratio of cellulose nanofibers and rubber components is adjusted so as to achieve the ratio after formed into a rubber composition as will be described later, and is for example, preferably 0.1 to 100 parts by weight of cellulose-based fibers based on 100 parts by weight of rubber component.

2. Processes for preparing rubber compositions

A crosslinkable master batch may be prepared by adding a crosslinking agent to a master batch prepared by the above methods and kneading it. The term "kneading" refers to a step of homogenously dispersing a crosslinking agent and other formulating agents in a master batch. The kneading may be carried out as publicly known, and for example, may be carried out with banbury mixers, kneaders, open roll mills and the like. The crosslinking agent may include sulfur or peroxides. The amount of crosslinking agent formulated may be suitably adjusted. Other formulating agents may be ones that can be used in the field of rubber industry including vulcanization improver such as sulfenamides (e.g., N-t-butyl-2-benzothiazolesulfenamide), zinc oxide or stearic acid, vulcanization improvement aids, reinforcing agents such as carbon black or silica, silane coupling agents, oils, cured resins, waxes, anti-aging agents, peptizers or coloring agent. The other formulating agents may be added to the master batch.

Similarly, further rubber components may be added to the master batch, and with kneading it, a master batch may be formed in which cellulose-based fiber contents is diluted.

The temperature during the kneading may be around ambient temperature (in the order of 15 to 30 °C), however, may be heated to a high temperature so far as the rubber components do not undergo crosslinking reaction. For example, the upper limit of temperature is 140 °C or less, and more preferably 100 °C. The lower limit of the temperature is 15 °C or more, and preferably 20 °C or more. Therefore, the temperature during the kneading is preferably 15 to 140 °C, and more preferably 20 to 100 °C.

After the mixing, molding may be carried out if desired. Molding devices may include, for example, tool molding, injection molding, extrusion molding, blow molding, foam molding and the like, and may be suitably selected depending on shapes of final products, applications or molding methods.

The temperature during crosslinking the master batch is not specifically limited to so long as the conditions that the crosslinking reaction proceeds, commonly, a rubber composition can be obtained by heating a kneaded master batch to be crosslinked (or "vulcanized" if sulfur is used). The heating temperature is preferably 140 °C or more, preferably 200 °C or less, and more preferably 180 °C or less. Therefore, the heating temperature is preferably 140 to 200 °C, and more preferably 140 to 180 °C. Vulcanizing devices to carry out such as vulcanization in a mold, vulcanization in a can or continuous vulcanization may be used for crosslinking. The master batch of the present invention tends to proceed crosslinking reaction promptly compared to a master batch without cellulose nanofibers. The reason is not limited to, but assumed that functional groups such as carboxy group or the like in cellulose nanofibers promote the crosslinking reaction.

After crosslinking, and before forming a final product, a finishing treatment may be carried out if desired. The finishing treatment may include, for example, polishing, surface treatment, lipping, lipping and cutting, chlorine treatment, and only one of these treatments may be carried out, and may be combinations of two or more of them.

3. Mater batch and rubber composition

The master batch of the present invention provides a rubber composition that is superior in mechanical properties due to low content of contaminants derived from cellulose nanofibers. The cellulose-based fiber content of the rubber composition is preferably 0.1 to 100 parts by weight based on 100 parts by weight of rubber components. In view of improvement in tensile strength, the above content is preferably 1 part by weight or more, more preferably 2 parts by weight or more, and still more preferably 3 parts by weight or more. The upper limit of the content is preferably 50 parts by weight or less, more preferably 40 parts by weight or less, and still more preferably 30 parts by weight or less. The content enables to maintain processability in the preparing steps. The master batch of the present invention has characteristics of containing low contaminants.

Applications for the rubber composition of the present invention are not specifically limited to, but may include, for example, transportation devices such as automotive, trains, ships or airplanes; electric appliances such as personal computers, televisions, telephones or clocks; AV equipment such as portable audio player or video players; printing devices; copying devices; sports gears; building materials; office equipment such as writing materials; packaging such as vessels or containers. Apart from these, it is possible to apply to materials in which rubber or flexible plastic is used, and an application for tires is preferred. The tires may include, for example, pneumatic tires for passenger cars, trucks, buses, heavy-duty vehicles and the like.

EXAMPLES

The following examples further illustrate the present invention without, however, limiting the present invention thereto.

<Example 1>

[Preparation of oxidized cellulose nanofibers]

5.00 g (on a bone dry basis) of an unbeaten bleached softwood kraft pulp (brightness 85 %) was added to 500 mL of a solution of 39 mg of TEMPO (from Sigma Aldrich) (0.05 mmol per gram of bone dry cellulose) and 514 mg of sodium bromide (1.0 mmol per gram of bone dry cellulose) dissolved in water, and the mixture was stirred until the pulp was homogeneously dispersed. An aqueous sodium hypochlorite solution was added to the reaction system so that sodium hypochlorite is 5.5 mmol/g to start an oxidation reaction at room temperature. As the pH in the system decreased during the reaction, a 3M aqueous sodium hydroxide solution was successively added to adjust the reaction system at pH 10. The reaction was terminated when sodium hypochlorite has been consumed and no change was observed in the pH in the system. After the reaction, the mixture was filtered through a glass filter to separate the pulp, and the pulp was thoroughly washed with water to give an oxidized pulp (carboxylated cellulose). The pulp yield was 90 %, the time required for the oxidation reaction was 90 minutes, and the carboxy group content was 1.6 mmol/g. The content was adjusted to 1.0 % by weight (w/v) by adding water to the reaction mixture, and treated by an ultra-high pressure homogenizer (20 °C, 150 MPa) for three cycles to give a dispersion of oxidized cellulose nanofibers. The average fiber diameter was 3 nm and the aspect ratio was 250. The transparency of the dispersion was 89 % at this stage.

A final dispersion of oxidized cellulose nanofibers was obtained by filtration treating the above dispersion of oxidized cellulose nanofibers with the following method. A filter paper as a filter medium (from Azumi Filterpaper Co.,Ltd, Axtar B508-10P) was attached to a stainless holder with a tank (KST-47, from Advantec, filtration area of 12.5 cm$^2$). 1.25 g of diatomaceous earth as a filtration aid (from Showa Chemical Industry Co.,Ltd, Radiolite 700, average particle size of 29.6 $\mu$m) was took and dispersed in a 1 L of water, and this was provided to the filter paper to pre-coat and form a layer of filtration aid. After that, in order to carry out body-feed filtration, 5 g of diatomaceous earth was mixed with 5 L of dispersion of cellulose nanofibers, and then it was charged into the pressurized tank. This dispersion was pressurized to 0.35 MPa by a nitrogen gas, and the filtration was carried out with a filtration pressure differential of 0.35 MPa to obtain 1,274 L/m$^3$ of filtrate for 20 minutes. The transparency of the filtrate was 95 %. The transparency was evaluated by a transparency at 660 nm light with UV spectrophotometer U-3000 (Hitachi High-Technologies Corporation).

Based on 100 parts by weight of bone dry weight of oxidized cellulose nanofibers, 200 parts by weight of polyethyleneglycol (PEG, molecular weight of 600) was added to the filtrate (1.0 % by weight (w/v) dispersion of oxidized cellulose nanofibers) and stirred for 2 hours using a stirrer, and defoamed with an ultrasonic washer.

A rubber frame was placed on a film made of polyethylene terephthalate (PET) and firmly fixed, and casted pure water to confirm that no leakage was appeared, then internal water was removed, whereby dusts deposited on the PET film were also removed. The dispersion of cellulose nanofibers was casted in the rubber frame on the dried PET film so that it does not make foams, and left to stand in a heated oven at 40 °C for a whole day and night. A cellulose nanofiber film was obtained after confirming that the drying is sufficient. The size of resultant film was 18 cm × 18 cm, and its thickness was 0.1 mm.

Next, in a blackout curtain, a plainer LED light was installed, with removing dusts by an air duster, the film as a specimen was installed with being sandwiched by two polarizing plates above the LED light. These two polarizing plates were arranged so that the directions of their polarizing axes were orthogonalized with each other. The size of film was 18 cm × 18 cm, and the size of two polarizing plates was the size that is able to cover the whole film. And, a light was exposed from the LED light that was possible to expose from the whole beneath surface, and a transmitted image was shot by a digital camera from above to capture the whole film into the scope.

Based on the resultant image shot, as well as confirming whether contaminants are included in the specimen, by image analysis of the resultant image shot, an area ratio of contaminants was calculated. An image analysis software of ImageJ developed by Mr. Wayne Rasband was used for the image analysis.

[Preparation of mater batch]

325 g of water dispersion with 1 % by weight of solid content of oxidized cellulose nanofibers after the filtration treatment obtained in Production Example 1 was mixed with 100 g of natural rubber latex (product name: HA Latex, Regitex Co. Ltd., solid content of 65 %) to make a weight ratio of rubber components and cellulose nanofibers to 100:5, and stirred the mixture by TK Homomixer (8000 rpm) for 10 minutes. This aqueous suspension liquid was dried in a heated oven at 70 °C for 10 hours to obtain a master batch.

2.3 g of sulfur (3.5 % by weight to solid content of the natural rubber latex), 0.5 g of vulcanization improver (BBS, N-t-butyl-2-benzothiazolesulfenamide) (0.5 % by weight to solid content of the natural rubber latex) to this master batch and 3.9 g of zinc oxide (6 % by weight to solid content of the natural rubber latex) were added to this master batch and kneaded at 30 °C for 10 minutes using an open roll mill (from KANSAI ROLL Co., Ltd.) to obtain a sheet of crosslinkable master batch.

[Preparation of rubber composition]

This sheet was inserted into a mold and vulcanized under pressure at 150 °C for 10 minutes to give a vulcanized rubber sheet having a thickness of 2 mm. The resulting sheet was cut into test specimens of a predetermined shape and tested for stresses at 100 % strain and at 300 % strain, and breaking strength as measures of tensile strength according to JIS K6251 "Rubber, vulcanized or thermoplastics - Determination of tensile stress-strain properties". Higher values indicate that the rubber composition (vulcanized rubber composition) is more sufficiently reinforced and has high mechanical strength.

<Example 2>

Other than replacing the diatomaceous earth with powdered cellulose (from Nippon Paper Industries Co., Ltd., KC FLOCK W-300G, average particle size of 28 $\mu$m) in the filtration treatment of oxidized cellulose nanofibers in Example 1, the same filtration treatment as Example 1 was carried out. The transparency of the dispersion of oxidized cellulose nanofibers after the filtration treatment was 94 %.

<Example 3>

Other than using a metallic filter having a pore size of 3 $\mu$m as the filter medium without using a filtration aid in the filtration treatment of oxidized cellulose nanofibers in Example 1, the same filtration treatment as Example 1 was carried out. The transparency of the dispersion of oxidized cellulose nanofibers after the filtration treatment was 95 %.

<Example 4>

Other than using a metallic filter having a pore size of 20 $\mu$m as the filter medium without using a filtration aid in the filtration treatment of oxidized cellulose nanofibers in Example 1, the same filtration treatment as Example 1 was carried out. The transparency of the dispersion of oxidized cellulose nanofibers after the filtration treatment was 93 %.

<Example 5>

Other than using a membrane filter having a pore size of 8 $\mu$m (from Millipore Corporation, cellulose ester membrane filter) as the filter medium without using a filtration aid in the filtration treatment of oxidized cellulose nanofibers in Example 1, the same filtration treatment as Example 1 was carried out. The transparency of the dispersion of oxidized cellulose nanofibers after the filtration treatment was 94 %.

<Comparative Example 1>

Other than the filtration treatment of oxidized cellulose nanofibers was not carried out in Example 1, a rubber composition was prepared as the same method as Example 1.

<Example 6>

[Preparation of carboxymethylated cellulose nanofibers]

In a stirrer capable of mixing pulp, 200 g of a pulp (NBKP (bleached softwood kraft pulp) from Nippon Paper Industries Co., Ltd.) on a dry mass basis and 111 g of sodium hydroxide on a dry mass basis (2.25 times mole per anhydrous glucose residue of a starting material) were added and water was added in such an amount that the solids content of the pulp was 20 % by weight (w/v). Then, the mixture was stirred at 30 °C for 30 minutes, and then 216 g (on an active ingredient basis, 1.5 times mole per glucose residue of the pulp) of sodium monochloroacetate was added. The mixture was stirred for 30 minutes, and then heated to 70 °C and stirred for 1 hour. Then, the reaction mixture was removed and neutralized and washed to obtain a carboxymethylated pulp having a degree of substitution with carboxymethyl group of 0.25 per glucose unit. Then, a solid content was adjusted to 1 % by weight by adding water to this, and carboxymethylated cellulose fibers was obtained by disintegrating for 5 cycles in use of a high pressure homogenizer at 20 °C, 150 MPa. The average fiber diameter was 15 nm and the aspect ratio was 50.

Other than replacing the oxidized cellulose nanofibers with the carboxymethylated cellulose nanofibers, a rubber composition was prepared by the same method as Example 1. The transparency of the dispersion of carboxymethylated cellulose nanofibers was 67 % before the filtration treatment, and 85 % after the filtration treatment.

<Comparative Example 2>

Other than a filtration treatment was not carried out to the water dispersion of carboxymethylated cellulose fibers in preparation of the carboxymethylated cellulose fibers in Example 6, a rubber composition was prepared by the same method as Example 6.

<Example 7>

[Preparation of cationized cellulose nanofibers]

In a pulper capable of stirring pulp, 200 g of a pulp (NBKP from Nippon Paper Industries Co., Ltd.) on a dry weight basis and 24 g of sodium hydroxide on a dry weight basis were added and water was added in such an amount that the solids content of the pulp was 15 % by weight. Then, the mixture was stirred at 30 °C for 30 minutes, and then heated to 70 °C, and 200 g (on an active ingredient basis) of 3-chloro-2-hydroxypropyltrimethylammonium chloride was added as a cationizing agent. After the mixture was reacted for 1 hour, the reaction mixture was removed and neutralized and washed to give a cationically modified pulp having a degree of substitution with cationic group of 0.05 per glucose unit. Then, the solids content was adjusted to 0.5 % by weight, and treated for 2 cycles in use of a high pressure homogenizer at 20 °C, 140 MPa. The average fiber diameter was 25 nm and the aspect ratio was 50.

Other than replacing the oxidized cellulose nano fibers with the cationized cellulose nanofibers, a rubber composition was prepared by the same method as Example 1. The transparency of the dispersion of cationized cellulose nanofibers was 15 % before the filtration treatment, and 70 % after the filtration treatment.

<Comparative Example 3>

Other than the filtration treatment was not carried out to the water dispersion of cationized cellulose nanofibers in preparation of the cationized cellulose nanofibers in Example 7, a rubber composition was prepared by the same method as Example 7.

| Sample | Modification of CNF | Filtration aid | Filter medium | Transparency (%) | M100 (MPa) | M300 (MPa) | Breaking strength (MPa) | Contaminants area ratio (%) |
|---|---|---|---|---|---|---|---|---|
| Example 1 | Oxidation | Diatomaceous earth (average particle size 29.6 μm) | Filter paper | 95 | 1.36 | 5.20 | 27.1 | 0.1 |
| Example 2 | Oxidation | Powdered cellulose (average particle size 28 μm) | Filter paper | 94 | 1.37 | 5.25 | 27.0 | 0.2 |
| Example 3 | Oxidation | None | Metallic filter (pore size 3 μm) | 95 | 1.35 | 5.19 | 26.3 | 0.2 |
| Example 4 | Oxidation | None | Metallic filter (pore size 20 μm) | 93 | 1.33 | 5.15 | 26.5 | 0.8 |
| Example 5 | Oxidation | None | Membrane filter (pore size 8 μm) | 94 | 1.35 | 5.15 | 26.2 | 0.5 |
| Comparative Example 1 | Oxidation | - | - | 89 | 1.30 | 5.08 | 24.3 | 4.3 |
| Example 6 | Carboxymethylation | Diatomaceous earth (average particle size 29.6 μm) | Filter paper | 85 | 1.32 | 5.13 | 24.8 | 2.8 |
| Comparative Example 2 | Carboxymethylation | - | - | 67 | 1.27 | 4.82 | 23.7 | 99 |
| Example 7 | Cationization | Diatomaceous earth (average particle size 29.6 μm) | Filter paper | 70 | 1.39 | 5.30 | 27.2 | 20 |
| Comparative Example 3 | Cationization | - | - | 15 | 1.29 | 5.14 | 24.0 | 1600 |

Transparencies of Example 7 and Comparative Example 3 are values measured with content of 0.5 % by weight
Contaminants evaluation of Comparative Example 2 was carried out with 0.1 g of bone dry weight of cellulose nanofibers and converted to 1g.
Contaminants evaluation of Comparative Example 3 was carried out with 0.01 g of bone dry weight of cellulose nanofibers and converted to 1g.

As apparent from Table 1, it is recognized that in Examples 1 to 5 in which the dispersions of oxidized cellulose nanofibers were filtrated, because the stresses at 100 % and 300 % strain and the breaking strengths were larger than that of Comparative Example 1 in which the filtration treatment was not carried out, the rubber compositions were sufficiently reinforced and superior in mechanical strengths. In the same manner as Examples 6 and 7 in which the modification method of cellulose nanofibers was changed to carboxymethylation and cationization respectively, because the stresses at 100 % and 300 % strain and the breaking strengths were larger than that of Comparative Examples 2 and 3 in which the filtration treatments were not carried out, it is recognized that the rubber compositions were sufficiently reinforced and superior in mechanical strengths. The reasons for the improvement of tensile strengths are not limited to, but supposed to decrease of starting points of failure due to low contaminants in cellulose nanofibers.

1 Specimen
2, 3 Polarizing plate
10 Imaging device
20 Light source

**Claims**

1. A process for preparing a master batch, comprising:

   the step of filtrating a dispersion of cellulose nanofibers under pressure or under reduced pressure with a filtration pressure differential of 0.01 MPa or more; and
   the step of mixing cellulose nanofibers obtained by the filtration step and rubber component.

2. The process of claim 1, wherein a filtration aid is used in the filtration step.

3. The process of claim 2, wherein the filtration aid is a granulated substance having an average particle size of 150 $\mu$m or less.

4. The process of claim 3, wherein the granulated substance is selected from the group consisting of diatomaceous earth, powdered cellulose and a combination thereof.

5. The process of claim 1, wherein a metallic filter or a membrane filter is used as a filter medium in the filtration step.

6. The process of any one of claims 1 to 5, wherein the cellulose nanofibers are oxidized cellulose nanofibers.

7. The process of any one of claim 1 to 6, wherein the dispersion of cellulose nanofibers after the filtration has a contaminant area ratio of 25 % or less when the amount of contaminants is evaluated by the following method:

   1) forming a film after adding a surface tension adjustor to the dispersion of cellulose nanofibers after the filtration;
   2) arranging a pair of polarizing plates on both sides of the film so that polarizing axes are orthogonalize with each other;
   3) exposing light from one side of the polarizing plate, and obtaining a transmitted image from the other side of the polarizing plate; and
   4) carrying out image analysis of the image to determine a contaminant area to calculate the contaminant area ratio per gram of bone dry weight of the cellulose nanofibers.

8. The process of claim 7, wherein the dispersion of cellulose nanofibers after the filtration has the contaminant area ratio of 4 % or less.

9. A master batch prepared by the process of any one of claims 1 to 8.

10. A process for preparing a rubber composition, comprising:

   the step of preparing the master batch by the method of any one of claims 1 to 8; and
   the step of crosslinking the master batch.

# Fig.1

# Fig.2

Fig.3

<table>
<tr><td colspan="2"><b>INTERNATIONAL SEARCH REPORT</b></td><td>International application No.<br>PCT/JP2017/025299</td></tr>
</table>

| | |
|---|---|
| A. CLASSIFICATION OF SUBJECT MATTER<br>*C08J3/22*(2006.01)i, *C08L1/02*(2006.01)i, *C08L21/00*(2006.01)i | |

According to International Patent Classification (IPC) or to both national classification and IPC

**B. FIELDS SEARCHED**

Minimum documentation searched (classification system followed by classification symbols)
C08J3/00-3/28, C08J99/00, C08B1/00-37/18, C08L1/02, C08L21/00

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2014-139303 A (Mitsubishi Chemical Corp.), 31 July 2014 (31.07.2014), claims; paragraphs [0005], [0021], [0109] to [0118] (Family: none) | 1-10 |
| Y | JP 2014-181255 A (The Nippon Synthetic Chemical Industry Co., Ltd.), 29 September 2014 (29.09.2014), claims; paragraphs [0093], [0151] (Family: none) | 1-10 |
| Y<br>A | JP 2015-183020 A (Nippon Paper Industries Co., Ltd.), 22 October 2015 (22.10.2015), claims; paragraph [0002] (Family: none) | 2-4<br>1,5-10 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>19 September 2017 (19.09.17) | Date of mailing of the international search report<br>26 September 2017 (26.09.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

| International application No. |
|---|
| PCT/JP2017/025299 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2014-001361 A  (Olympus Corp.),<br>09 January 2014 (09.01.2014),<br>claims; paragraphs [0038], [0045], [0052] to [0055]<br>(Family: none) | 1-10 |
| A | JP 2006-206864 A  (The Yokohama Rubber Co., Ltd.),<br>10 August 2006 (10.08.2006),<br>claims; paragraphs [0028] to [0037]<br>& US 2007/0241480 A1<br>claims; paragraphs [0028] to [0046]<br>& WO 2006/070770 A1    & EP 1833885 A1<br>& CN 1914258 A | 1-10 |
| A | WO 2015/152188 A1  (Dainichiseika Color & Chemicals Mfg. Co., Ltd.),<br>08 October 2015 (08.10.2015),<br>claims; paragraphs [0075], [0077], [0106] to [0108], [0112] to [0114]<br>& JP 2016-104865 A     & US 2017/0001162 A1<br>claims; paragraphs [0085], [0088], [0118] to [0120], [0124] to [0127]<br>& EP 3127954 A1          & CA 2944411 A<br>& CN 106164154 A | 1-10 |
| A | JP 2013-186034 A  (Kyoto University),<br>19 September 2013 (19.09.2013),<br>entire text<br>(Family: none) | 1-10 |

Form PCT/ISA/210 (continuation of second sheet) (January 2015)

**EP 3 483 202 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006206864 A